# EUROPEAN PATENT APPLICATION

(11) **EP 4 624 148 A1**
(43) Date of publication of application: **01.10.2025**
(21) Application number: 23894486.2
(22) Date of filing: 15.11.2023
(51) Int. Cl.: B32B 9/00, B32B 27/00, B32B 27/30, B65D 65/40

(54) **MULTILAYER OBJECT, INK-PRINTED MULTILAYER OBJECT OBTAINED THEREFROM, AND PACKAGE**

(30) Priority: 25.11.2022 JP 2022188031
(71) Applicant: Toray Advanced Film Co., Ltd., Chuo-ku Tokyo 103-0021 (JP)
(72) Inventor: SATO, Yoshikazu, Iwase-gun, Fukushima 969-0402 (JP); KUSAMA, Shinya, Iwase-gun, Fukushima 969-0402 (JP); TSUMURAYA, Mitsuhiro, Iwase-gun, Fukushima 969-0402 (JP)
(74) Representative: Kador & Partner Part mbB
(86) International application number: PCT/JP2023/041062
(87) International publication number: WO 2024/111477

(57) **Abstract**

Provided are a multilayer object having excellent adhesion and a package including the multilayer object. The multilayer object comprises a base film and, disposed on at least one side thereof, an inorganic-compound layer and a protective layer, and is characterized in that the protective layer at least includes a water-soluble polymer, a linear polysiloxane, and an alkoxysilane having a ureido group.

## Description

### TECHNICAL FIELD

The present invention relates to a laminated body having excellent adhesion properties, as well as a printing ink-layered laminated body and a packaging material that includes it.

### BACKGROUND ART

Various packaging materials have been used for the packaging of various items such as foods, beverages, pharmaceuticals, and daily necessaries. These packaging materials are required to have good oxygen barrier properties and water vapor barrier properties in order to prevent deterioration of the contents. Aluminum foil, which exhibits excellent gas barrier properties, has been used as packaging material for retort food products. However, packaging materials that incorporate aluminum foil are difficult to handle due to the susceptibility of aluminum foil to pinhole formation, which limits their applications.

Aiming to solve these problems, there are useful films that are produced by depositing aluminum, aluminum oxide, etc., on films of thermoplastic resin such as polyester film to form gas barrier layers by means of a physical vapor deposition technique such as vacuum deposition. In addition, these films may be coated with printing ink intended to impart characters, designs, etc., on their surfaces, or combined with other resin films to provide various packaging materials designed for different uses. However, for boiled and retortpouched food products that are likely to be exposed to harsh use conditions, a protective layer may be laid over the gas barrier layer, followed by coating the protective layer with printing ink or covering it with another resin film, in order to prevent a reduction in gas barrier performance.

For use as a gas barrier film for packaging of boiled and retort-pouches foods, there is a recently disclosed gas barrier film that includes a plastic film with at least one side laid with a deposited layer of an inorganic oxide or an inorganic nitride and has an additional layer of a specific resin (Patent document 1).

In addition, with the aim of forming a deposition film with improved alkali boiling resistance and acetic acid retorting resistance and preventing deterioration in external appearance of an aluminum deposition layer, there is another disclosed laminated body that includes a base (a), a metal deposited layer (b), and a protective layer (c) laid in this order, where the protective layer (c) contains a specific dimer acid based polyamide resin. However, not only were its gas barrier properties inferior, but the adhesion between the protective layer and the printed layer or other resin films was also inadequate (Patent document 2).

To solve these problems, some other gas barrier films have been disclosed which include a deposited layer of an inorganic compound and a protective layer of a specific material (Patent documents 3 to 6).

### PRIOR ART DOCUMENTS

### PATENT DOCUMENTS

Patent document 1: Japanese Unexamined Patent Publication (Kokai) No. 2010-131756
Patent document 2: Japanese Unexamined Patent Publication (Kokai) No. 2012-210744
Patent document 3: Japanese Patent No. 4403796
Patent document 4: Japanese Patent No. 5739684
Patent document 5: Japanese Unexamined Patent Publication (Kokai) No. 2019-209645
Patent document 6: Japanese Patent No. 4200972

### SUMMARY OF INVENTION

### PROBLEMS TO BE SOLVED BY THE INVENTION

All of these patent documents describe laminates composed mainly of a deposited layer formed of a metal or a metal compound and a layer of a specific resin formed thereon. For example, Patent document 3 proposes a technique that aims to prevent deterioration of gas barrier properties after printing. Specifically, a gas barrier layer made of an inorganic oxide is formed on a base treated with plasma or laminated with a substrate layer, followed by adding a protective layer formed by polymerizing a silane based coupling agent monomer containing at least one of acrylate groups, methacrylate groups, and vinyl groups, and a monomer containing hydroxy group and at least one of acrylate group, methacrylate group, and vinyl group, thereby providing a gas barrier film. Furthermore, Patent document 4 discloses a gas barrier film that includes a base made of a synthetic resin film and a gas barrier layer made of a deposited film laid thereon, and in addition, for the purpose of improving the gas barrier properties, a protective layer formed by curing an alkoxysilane having a radical polymerizable group and an alkoxysilane having no radical polymerizable group is laid thereon. However, none of these patent documents address a lamination structure in contact with a protective layer, nor do they address a protective layer component that is suitable for treatment with a printing ink or lamination with another resin film. Furthermore, although Patent documents 5 and 6 describe the lamination of a protective layer that contains a water soluble polymer along with a multimetric compound composed mainly of a hydrolysate of a metal alkoxide and address the inclusion of a specific silicon compound, neither of these patent documents consider the bonding state that is necessary for achieving good adhesion properties and gas barrier properties stably. Moreover, since these do not address the incorporation of a polysiloxane having a linear structure, the protective layer cannot maintain sufficiently strong adhesion with adjacent layers (for example, printing ink layer, adhesive layer, or resin layer), possibly resulting in problems such as inadequate adhesion strength and poor gas barrier properties.

In view of these problems, the main object of the present invention is to provide a method for stable production of a laminated body having good adhesion properties and a packaging material formed thereof, which is realized by clarifying optimum states of laminated bodies.

### MEANS OF SOLVING THE PROBLEMS

The laminated body according to the present invention is one that includes a base film having an inorganic compound layer and a protective layer laid on at least one side thereof wherein the protective layer includes at least a water soluble polymer, a linear polysiloxane, and a silicon alkoxide having a ureido group.

Here, the laminated body described above may be one in which the silicon alkoxide having a ureido group accounts for 2.5% or more of the total solid content of the protective layer.

It may also be a laminated body as set forth in any one of the above paragraphs wherein the protective layer further includes a silicon alkoxide having no ureido group and wherein the linear polysiloxane and all silicon alkoxides contained in the protective layer have a ratio by mass that satisfies the relation of linear polysiloxane / all silicon alkoxides = 15/85 to 90/10 as converted in terms of SiO₂.

It may also be a laminated body as set forth in any one of the above paragraphs wherein the water soluble polymer present in the protective layer is a vinyl based polymer having a carbonyl group in a cyclic structure.

It may also be a laminated body as set forth in any one of the above paragraphs wherein the protective layer has an average thickness of 100 to 1,000 nm.

It may also be a laminated body as set forth in any one of the above paragraphs wherein the inorganic compound layer contains aluminum oxide.

The present invention also provides a printing ink-layered laminated body that includes a laminated body as set forth in any one of the above paragraphs having a printing ink layer laid on the protective layer side.

It also provides a packaging material that includes a printing ink-layered laminated body incorporating a printing ink layer laid on a laminated body as set forth in any one of the above paragraphs and/or the protective layer of a laminated body as set forth in any one of the above paragraphs.

### ADVANTAGEOUS EFFECTS OF THE INVENTION

The present invention can provide a laminated body having good adhesion properties and a packaging material formed thereof.

### DESCRIPTION OF PREFERRED EMBODIMENTS

The laminated body according to the present invention will be described in more detail below.

The laminated body according to the present invention is one that includes a base film having an inorganic compound layer and a protective layer laid on at least one side thereof wherein the protective layer includes at least a water soluble polymer, a linear polysiloxane, and a silicon alkoxide having a ureido group.

### [Base film]

There are no specific limitations on the resins to be present in the base film to use for the present invention, and examples thereof include polyester based resins such as polyethylene terephthalate, polyethylene-2,6-naphthalate, polypropylene terephthalate, and polybutylene terephthalate; polyolefin based resins such as polyethylene, polystyrene, polypropylene, polyisobutylene, polybutene, and polymethylpentene; and others such as cyclic polyolefin based resins, polyamide based resins, polyimide based resins, polyether based resins, polyesteramide based resins, polyetherester based resins, acrylic resins, polyurethane based resins, polycarbonate based resins, and polyvinyl chloride based resins, as well as biodegradable resins such as polylactic acid, polycaprolactone, polyglycolic acid, and polyvinyl alcohol. Of these, polypropylene is preferable from the perspective of ease of recycling while polyester is preferable from the perspectives of not only recyclability but also adhesion to inorganic layers and handling. It is preferable that recycled materials account for 3 to 55 mass% of the total amount of these resins. Here, the recycled materials may be either those recycled by mechanical recycling or those recycled by chemical recycling, and there are no particular limitations on the use thereof. Furthermore, they may be mixed resins formed by combining resins listed above as components of the base film, which are raw materials derived from chemical fuels and/or raw materials derived from biomass (plant-derived). For example, in the case of polyester, it is preferable that either or both of the diol and the dicarboxylic acid that are used as its raw materials include 10 to 95 mass% biomass (plant-derived) relative to the entire resin composition.

The base film may be either an unstretched film or a stretched (uniaxial or biaxial) film, but the use of a biaxially stretched film is preferable from the viewpoint of thermal dimensional stability.

There are no particular limitations on the thickness of the base film, but it is preferably 1 µm or more and 100 µm or less, more preferably 5 µm or more and 50 µm or less, still more preferably 10 µm or more and 30 µm or less.

If necessary, the surface of the base film may undergo corona treatment, ozone treatment, glow discharge treatment, or the like in order to improve adhesion with inorganic layers.

### [Inorganic compound layer]

An inorganic compound layer as referred to for the present invention is a layer containing an inorganic compound and it may be a mixture with a simple inorganic substance as long as it contains an inorganic compound. Examples of such inorganic compounds include aluminum, magnesium, titanium, tin, indium, silicon, zinc, and oxides thereof, which may be used alone or as a mixture of two or more thereof. The inorganic compound layer is more preferably an inorganic compound that contains a metal oxide or a metal nitride. If the inorganic compound layer contains a metal oxide or a metal nitride, it is preferable because it ensures durability to heat applied during processing by boiling or retorting and also because, when the laminated body according to the present invention is used as a packaging material for acidic contents, it ensures increased acid resistance to the acidic contents. Examples of useful metal oxides include aluminum oxide, magnesium oxide, titanium oxide, tin oxide, indium oxide alloy, silicon oxide, and silicon oxynitride, while examples of useful metal nitrides include aluminum nitride, titanium nitride, and silicon nitride. These inorganic compounds may be used alone or as a mixture of two or more thereof. Here, the elemental composition may vary in the thickness direction in the inorganic layer. If the elemental composition of the inorganic compound layer varies in the thickness direction, it can serve to improve the adhesion between the inorganic compound layer and the protective layer and, when incorporated in a laminated body, it works to prevent peeling between the inorganic compound layer and the protective layer. Of the above substances, oxygen and aluminum are preferable as elemental components present in the inorganic compound layer from the viewpoint of manufacturing cost, gas barrier properties during the manufacturing process, heat resistance to the heat applied during the processing by boiling or retorting mentioned above, and acid resistance to acidic contents.

There are no particular limitations on the method to use for forming the inorganic compound layer, and it can be formed by a generally known method such as vapor deposition, sputtering, ion plating, plasma chemical vapor deposition, or the like. However, from the viewpoint of productivity, the use of the vacuum vapor deposition technique is preferable. Furthermore, as one example of a method for forming an inorganic compound layer in which the elemental composition varies in the thickness direction, a process for forming an inorganic compound layer in which the composition changes continuously from an aluminum metal layer to an aluminum oxide layer will be described below. In this case, as the method for forming an inorganic compound layer, it is preferable to adopt a process in which the composition is varied continuously from an aluminum metal layer to an aluminum oxide layer in a vacuum chamber. Formation of an inorganic compound layer can be performed by a generally known method such as vapor deposition, sputtering, ion plating, and plasma chemical vapor deposition. However, from the viewpoint of productivity, the use of the vapor deposition technique is preferable. The production process is described in more detail below. In a vacuum chamber, a roll of base film is set and the base film is unwound, followed by heating it to evaporate aluminum. For the heating to evaporate aluminum, useful methods include resistance heating, high frequency heating, and electron beam heating. The aluminum evaporated by heating attaches to the base film to form an aluminum metal layer. After the formation of an aluminum metal layer, oxygen gas is introduced during the latter half of the deposition step. Since the oxygen gas introduced above diffuses in the direction from the take-up side toward the unwinding side of the base film, the reaction involving oxygen to convert the aluminum metal layer to an aluminum oxide layer proceeds continuously, thereby producing an inorganic compound layer having a gradient structure in which the composition varies continuously in the film thickness direction.

Here, the gradient structure of the inorganic layer described above can be controlled by adjusting or changing the feed rate and introduction speed of the oxygen gas introduced as described above, the position, shape, and number of oxygen inlets such as oxygen nozzles, the conveying speed of the base film, etc., though the present invention is not particularly limited to these.

A good method for measuring the film thickness of the gradient structure is to perform compositional analysis in the depth direction by X-ray photoelectron spectroscopy (XPS) and determine the structure of the inorganic compound film based on depth profiles. Here, for metal elements, the oxide component and the metal component are separated in developing profiles. After starting ion etching from the surface layer on the protective layer side, data collection is continued until the base is reached, and the resulting depth profile of each element is examined to determine the presence or absence of a continuous increase or decrease in its amount. Regarding the presence or absence of a continuous increase or decrease, the existence of a continuous increase or decrease is determined according to whether the length of the increase or decrease continues over 2 nm or more.

Next, the total thickness of the inorganic compound layer is determined by the method described later. The film thickness of the gradient structure is calculated from the total thickness of the inorganic compound layer and the size of the region showing the inorganic compound layer in the depth profile.

For the present invention, the thickness of the inorganic compound layer is preferably 5 nm or more and 150 nm or less, and it is more preferably 7 nm or more and 100 nm or less because it facilitates the enhancement of gas barrier properties and easy avoidance of cohesive failure in the inorganic compound layer, as described later, which ensures increased adhesion. If the thickness is 5 nm or less, it may lead to inferior gas barrier properties, whereas if it is 150 nm or more, cohesive force in the inorganic compound layer may decrease, resulting in cohesive failure in the inorganic compound layer to cause the inorganic compound layer to crack or peel off in some cases.

### [Protective layer]

For the present invention, the protective layer contains at least a water soluble polymer, a linear polysiloxane, and a silicon alkoxide having a ureido group. The inclusion of a water soluble polymer, a linear polysiloxane, and a silicon alkoxide having a ureido group in the protective layer works to improve the adhesion between the protective layer and other adjacent layers (printing ink layer, adhesive layer, resin layer, etc.), thereby leading to a laminated body having enhanced adhesive strength and gas barrier properties. It is presumed that when a water soluble polymer and a linear polysiloxane are included in the protective layer, their molecular chains are densely intertwined to form and immobilize a network of molecular chains in the protective layer, thereby restricting the movement of the molecular chains of the components of the protective layer and limiting the pathways through which gas molecules such as oxygen and water vapor can permeate. It is also presumed that further inclusion of a silicon alkoxide having a ureido group acts not only to promote the interaction between the protective layer and functional groups contained in other adjacent layers (printing ink layer, adhesive layer, resin layer, etc.), but also to enhance their adhesion as it is incorporated into the aforementioned network of molecular chains of the water soluble polymer and linear polysiloxane to allow the components to remain in place without being removed even under a force working to cause delamination. As a result, not only the adhesive strength but also the gas barrier properties can be enhanced to form a protective layer having a structure that is dense enough to prevent the expansion of the permeation pathways for gas molecules of oxygen and water vapor from being caused by changes in environmental factors such as temperature, thereby working to develop good gas barrier properties even after high temperature processing in hot water such as boiling and retorting.

Examples of water soluble polymers suitable for the present invention include polyvinyl alcohol, ethylene-vinyl alcohol copolymers, and modified polyvinyl alcohol, which may be used alone or as a mixture of two or more thereof. In particular, vinyl alcohol based polymers (including modified polyvinyl alcohols) are preferable. Vinyl alcohol based polymers (including modified polyvinyl alcohols) are generally produced by saponifying polyvinyl acetate, and may be either in a partially saponified form (produced by saponifying only part of the acetyl groups) or in the fully saponified form, although a higher degree of saponification is more preferable. The degree of saponification is preferably 90% or more, and more preferably 95% or more. When the protective layer is low in the degree of saponification and contains many acetic acid groups that cause significant steric hindrance, it may undergo an increase in the free volume in the protective layer in some cases. The degree of polymerization of the vinyl alcohol based resins is preferably 1,000 or more and 3,000 or less, and more preferably 1,000 or more and 2,000 or less. If the degree of polymerization is too low, the polymer may become difficult to immobilize, making it less likely in some cases for adhesion properties and gas barrier properties to develop sufficiently.

It is particularly preferable for the water soluble polymer to be a vinyl based polymer having a carbonyl group in a cyclic structure. If such a vinyl based polymer having a carbonyl group in a cyclic structure is contained as the water soluble polymer in the protective layer, it will form a dense film as a result of hydrophobization by the cyclic structure and interactions caused by carbonyl groups around polymer molecules. This increases the water resistance and allows the protective layer to have a dense structure with low hydrophilicity, thus reducing the interactions with gas molecules of oxygen and water vapor and blocking their permeation pathways. It is considered that desirable adhesion properties and good gas barrier properties are developed in this way. Here, for the present invention, it is preferable that the vinyl based polymer having a carbonyl group in a cyclic structure accounts for 20 to 100 mass% of the total mass, which accounts for 100 mass%, of the water soluble polymer in the protective layer. If its content is less than 20 mass%, it may fail to improve the gas barrier properties sufficiently. It is most preferable that the vinyl based polymer having a carbonyl group in a cyclic structure accounts for 100 mass%, which means that all water soluble polymer molecules are in that form.

There are no particular limitations on the cyclic structure as long as it has three or more members (for example, three- to six-membered rings). The cyclic structure may also be a heterocyclic structure that contains non-carbon heteroatoms such as nitrogen, oxygen, sulfur, and phosphorus. Furthermore, the site of the carbonyl group in such a cyclic structure may be located on any of the main chain, side chain, and crosslinked chain in the vinyl based polymer. Specific examples of the vinyl based polymer having a carbonyl group in a cyclic structure include lactone structures, which are cyclic esters, and lactam structures, which are cyclic amides. These may be present alone or as a combination of two or more thereof, and there are no particular limitations, though the use of a lactone structure is preferable. When a vinyl based polymer having a lactone structure is used as the water soluble polymer, it must be stable to acid catalysts that are suitable for the hydrolysis of silicon alkoxide, which will be described later, and its gas barrier properties can be maintained easily. Examples of a vinyl based polymer having a lactone structure include α-acetolactone, β-propiolactone, γ-butyrolactone, and δ-valerolactone.

The linear polysiloxane to use for the present invention has few pores among its molecular chains, allowing the molecular chains to exist at a high density. It is presumed therefore that when a network of molecular chains is formed and immobilized in the protective layer, the movement of the molecular chains of the components of the protective layer can be suppressed, and accordingly, the protective layer will have a dense structure, thereby leading to improved adhesion properties and gas barrier properties. Linear polysiloxanes are represented by the chemical formula (1) given below, where n in the chemical formula (1) is an integer of 2 or greater. In the chemical formula (1), R may be, for example, a lower alkyl group such as a methyl group, ethyl group, n-propyl group, and n-butyl group, or a branched alkyl group such as an isopropyl group and t-butyl group. For the present invention, linear polysiloxanes having longer linear structures can work more easily to form and immobilize a network in the protective layer, and accordingly, n is preferably 5 or greater, and more preferably 10 or greater.

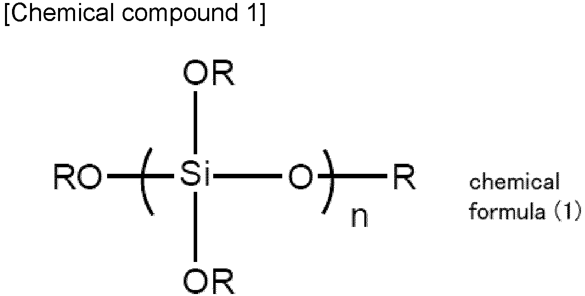

A linear polysiloxane can be produced from a silicon alkoxide as represented by Si(OR)₄. R in the silicon alkoxide is preferably a lower alkyl group, and examples thereof include a methyl group, ethyl group, n-propyl group, and n-butyl group. Specific examples of the silicon alkoxide include tetramethoxysilane, tetraethoxysilane, tetrapropoxysilane, and tetrabutoxysilane, which may be used alone or as a mixture of two or more thereof. The silicon alkoxide may be hydrolyzed to obtain a linear polysiloxane for example. The silicon alkoxide can be hydrolyzed in the presence of Si(OR)₄, water, a catalyst, or an organic solvent. The amount of water to be used for hydrolysis is preferably 0.8 equivalent or more and 5 equivalents or less, and more preferably 1.0 equivalent or more and 4 equivalents or less, relative to the alkoxy groups in Si(OR)₄. If the amount of water is less than 0.8 equivalent, hydrolysis may not proceed sufficiently and the intended linear polysiloxane may not be obtained in some cases. If more than 5 equivalents of water is used, the reaction of the silicon alkoxide that will be described later may proceed randomly to form large amounts of nonlinear polysiloxanes, thus failing to provide a linear polysiloxane in some cases.

It is preferable that the catalyst to use for the hydrolysis is an acid catalyst. Examples of good acid catalysts include, but not limited to, hydrochloric acid, sulfuric acid, nitric acid, phosphoric acid, acetic acid, and tartaric acid. Normally, both acid catalysts and base catalysts can be useful to promote the hydrolysis and polycondensation of silicon alkoxides. However, when an acid catalyst is used, the monomers in the system tend to be hydrolyzed in a more uniform manner, making it easier to produce a linear structure. On the other hand, when a base catalyst is used, the reaction mechanism that occurs tends to work to allow hydrolysis and polycondensation reactions of alkoxides bonded to the same molecule to proceed more easily. Accordingly, the reaction tends to progress in a random manner and yield a reaction product having larger numbers of pores. The amount of the catalyst to use is preferably 0.1 mol% or more and 0.5 mol% or less relative to the total amount by mole of the silicon alkoxide.

Examples of useful organic solvents for the hydrolysis include water and alcohols that can mix with silicon alkoxides such as methyl alcohol, ethyl alcohol, n-propyl alcohol, isopropyl alcohol, and n-butyl alcohol.

The hydrolysis is preferably performed at a temperature of 20°C or more and 45°C or less. If the reaction is attempted at less than 20°C, the reactivity may be too low in some cases, possibly making it difficult for Si(OR)₄ to be hydrolyzed smoothly. On the other hand, if the reaction is carried out at a temperature of more than 45°C, the hydrolysis and polycondensation reactions may proceed too quickly in some cases, possibly causing gelation or resulting in a random, less dense polysiloxane that is not linear.

For the present invention, any silicon alkoxide having a ureido group may be used as long as it has a ureido group in its structure. The ureido group in the silicon alkoxide may be monoto tri-functional, or the ureido group may be connected to a silicon atom in the silicon alkoxide via a straight chain, such as a methyl group, ethyl group, and propyl group, or a branched alkyl chain. Moreover, in order to ensure required properties, productivity, etc., one of different silicon alkoxides may be used singly or two or more thereof may be used in combination. Examples of such a silicon alkoxide having a ureido group include KBM-585 and KBM-585A, manufactured by Shin-Etsu Chemical Co., Ltd., A-1160, manufactured by Momentive Performance Materials Japan LLC, and DOWSIL (registered trademark) Z-6119 Silan, DOWSIL Z-6120 Silan, and DOWSIL Z-6675 Silan, manufactured by Dow Toray Co., Ltd., as well as other commercial products available from various manufacturers.

For the present invention, the protective layer to use may further contain a silicon alkoxide having no ureido group in addition to a water soluble resin, a linear polysiloxane, and a silicon alkoxide having a ureido group. Such a silicon alkoxide having no ureido group may be a silicon alkoxide as represented by the formula Si(OR)₄ described above or a silicon alkoxide having a functional group such as a silane coupling agent, and there are no particular limitations as long as it does not inhibit the effect of the present invention.

### [Component composition of protective layer]

For the present invention, the silicon alkoxide having a ureido group, as a solid component, preferably accounts for 2.5% or more of the total solid content of the protective layer. When the solid content accounted for by the silicon alkoxide having a ureido group is 2.5% or more, bonds and entanglements are more likely to form in the network of molecular chains of the water soluble polymer and the linear polysiloxane, making it easier for the components to stay in place without being removed during peeling and thereby ensuring the development of stronger adhesion. The solid content accounted for by the silicon alkoxide having a ureido group is preferably 5.0% or more, and more preferably 8.0% or more. Here, there are no particular limitations on the upper limit of the solid content accounted for by the silicon alkoxide having a ureido group, but if it is more than 50%, the amounts of the water soluble polymer and the linear polysiloxane in the protective layer may be too small in some cases, causing the molecular chain network to become less dense and possibly leading to deteriorated gas barrier properties. Therefore, it is preferably adjusted to 50% or less. It should be noted that the solid content accounted for by the silicon alkoxide having a ureido group can be determined by the method described below.

For the present invention, it is preferable that the total content of all water soluble resin components in the protective layer is 20 to 80 mass% relative to 100 mass% of the protective layer. When the content of the water soluble resin is 20 to 80 mass%, the protective layer tends to have a dense structure, thereby facilitating the development of good gas barrier properties in addition to good adhesion properties. If the content of the water soluble resin is less than 20 mass%, the protective layer tends to harden easily, possibly leading to cracks to cause deterioration in the gas barrier properties. If the content of the water soluble resin is more than 80 mass%, it may become impossible to immobilize the water soluble resin, possibly leading to deterioration in the gas barrier properties. It is more preferable that the content of the water soluble resin is 25 to 60 mass%, still more preferably 30 to 50 mass%.

For the present invention, it is also possible for the total content of all linear polysiloxanes in the protective layer to be 20 to 80 mass% relative to 100 mass% of the protective layer. However, as described above, it may further contain a silicon alkoxide that has or does not have a ureido group (or a hydrolysate of such a silicon alkoxide). Thus, on the basis of conversion of the linear polysiloxane and all silicon alkoxides into SiO₂, it is preferable that the total content of the inorganic component in the protective layer (hereinafter, the inorganic component in the protective layer will be referred to as protective layer inorganic component) is 20 to 80 mass% relative to 100 mass% of the protective layer, and it is more preferably 30 to 65 mass%. It should be noted that the content of the water soluble resin in the protective layer and that of the protective layer inorganic component can be measured by the method described later.

For the present invention, the mixing ratio of the linear polysiloxane and all silicon alkoxides in the protective layer may be adjusted appropriately. For the mixing ratio, the masses of the linear polysiloxane and all silicon alkoxides are converted into masses in terms of SiO₂, and on the bases of the converted masses, the mixing ratio by mass between the linear polysiloxane and all silicon alkoxides is preferably in the range of 15/85 to 90/10, more preferably in the range of 40/60 to 85/15, and still more preferably in the range of 40/60 to 65/35. If this ratio is more than 90/10, the interaction among molecules of the linear polysiloxane becomes too strong and unable to work for immobilizing the water soluble resin and the silicon alkoxide having a ureido group, which may lead to deterioration in adhesion properties and gas barrier properties in some cases. On the other hand, if it is less than 15/85, the number of Si-OH bonds derived from the silicon alkoxide increases to cause an increase in hydrophilicity, possibly reducing the gas barrier properties in some cases. The mixing ratio between the linear polysiloxane and the silicon alkoxides in the protective layer may be measured by the method described later.

Here, if the linear polysiloxane in use is one produced from an oligomeric raw material containing a plurality of Si(OR)₄ groups bonded to each other, it serves to facilitate the adjustment of the mixing ratio between the linear polysiloxane and the silicon alkoxides. Examples of such an oligomeric raw material containing a plurality of Si(OR)₄ groups bonded to each other include linear oligomers in the form of multimetric compounds containing multiple alkyl silicates such as methyl silicate as represented by the chemical formula (1) in which R is a methyl group and an ethyl silicate in which R is an ethyl group.

For the present invention, a protective layer can be formed by allowing the linear polysiloxane and each silicon alkoxide to be incorporated in the intended protective layer to undergo a polycondensation reaction by heating. As the polycondensation reaction proceeds, the numbers of alkoxy groups and/or hydroxy groups present in the linear polysiloxane and silicon alkoxides decrease, leading to a protective layer having a dense and tough structure. Moreover, the polycondensation reaction causes an increase in the molecular weights of the linear polysiloxane and the silicon alkoxides, thereby enhancing the ability to immobilize the water soluble resin and each silicon alkoxide having a ureido group themselves. Accordingly, a higher temperature is more preferable because a protective layer having better adhesion properties and gas barrier properties can be produced by promoting the reaction by applying heat. However, if the temperature is more than 200°C, the base film may shrink due to heat and the inorganic compound layer may suffer strain or cracking, leading to deterioration in gas barrier properties in some cases.

The protective layer can be produced by coating the inorganic compound layer with a coating liquid that contains components for forming the protective layer (hereafter, referred to as protective layer coating liquid), followed by drying. Accordingly, the drying temperature for the coating film, that is, the temperature at which the aforementioned polycondensation reaction is advanced, is preferably in the range of 100°C or more and 200°C or less, more preferably 120°C or more and 180°C or less, and still more preferably 150°C or more and and 180°C or less. If the temperature is less than 100°C, the water contained as the solvent that will be described later may not be evaporated sufficiently, possibly leading to poor curing of the layer.

The protective layer coating liquid can be prepared by mixing a solution prepared by dissolving a water soluble resin in water or a water/alcohol mixed solvent with a solution containing a linear polysiloxane and a silicon alkoxide having or not having a ureido group. Examples of a useful alcohol to use as a solvent include methyl alcohol, ethyl alcohol, n-propyl alcohol, isopropyl alcohol, and n-butyl alcohol.

There are no particular limitations on the method to use for spreading the protective layer coating liquid over the inorganic compound layer, and generally known ones can be adopted including the direct gravure method, reverse gravure method, micro gravure method, rod coating method, bar coating method, die coating method, and spray coating method.

For the present invention, the protective layer may contain a leveling agent, crosslinking agent, curing agent, adhesion promotor, stabilizer, ultraviolet absorber, antistatic agent, and the like, as long as they do not impair the adhesion properties or gas barrier properties. Good examples of the crosslinking agent include metal alkoxides of aluminum, titanium, zirconium, or the like, and complexes thereof.

The average thickness of the protective layer is preferably 10 nm or more and 1,000 nm or less, more preferably 100 nm or more and 600 nm or less, and still more preferably 250 nm or more and 500 nm or less. If the average thickness is less than 10 nm, pinholes or cracks in the inorganic compound layer may not be sufficiently filled, and adequate gas barrier properties may not be exhibited. On the other hand, if the thickness is more than 1,000 nm, cracks may occur in some cases due to the large thickness.

As described above, a condensation reaction proceeds upon heating in the protective layer, and accordingly the gas barrier properties are improved. Therefore, in order to enhance the gas barrier properties, it is also preferable to subject the laminated body to further heat treatment after the formation of the protective layer. The heat treatment temperature is preferably 30°C or more and 100°C or less, and more preferably 40°C or more and 80°C or less. The heat treatment time is preferably 1 day or more and 14 days or less, and more preferably 3 days or more and 7 days or less. If the heat treatment temperature is less than 30°C, the thermal energy required to accelerate the reaction may not be maintained sufficiently, resulting in an insufficient effect in some cases, whereas if it is more than 100°C, curling of the base or generation of oligomers may occur, or costs required for equipment or manufacturing may become too high in some cases.

### [Analysis of laminated body]

For the present invention, the presence of a linear polysiloxane in the protective layer can be examined by laser Raman spectroscopy. In laser Raman spectroscopic observations of bonding states of linear polysiloxanes and metal alkoxides (including hydrolysates of metal alkoxides), Raman bands attributed to linear polysiloxanes, random network structures that contain rings of five or more members along with branching, and four-membered cyclic structure all appear in the range of 400 to 500 cm⁻¹. These Raman bands overlap, with four-membered ring structures observed at 495 cm⁻¹, linear polysiloxanes observed at 488 cm⁻¹, and random network structures, which are not distinct regular structures, appearing as a broad band below 450 cm⁻¹, and their peaks can be separated by means of fitting based on Gaussian function approximation.

Described below is a method to determine the contents of the water soluble resins and the inorganic components (linear polysiloxanes and all silicon alkoxides (including hydrolysates of silicon alkoxides)) present in a protective layer. The amounts of linear polysiloxanes and all silicon alkoxides (including hydrolysates of silicon alkoxides), which are inorganic components, can be represented in terms of the amount of silicon as described above, and the total amount of silicon can be determined by X-ray fluorescence analysis. First, five types of standard samples that have known total silicon contents differing from each other are prepared and each sample is subjected to X-ray fluorescence analysis separately. For X-ray fluorescence analysis, X-rays are applied to a sample and element-specific fluorescent X-rays generated are detected. As the amount of generated X-rays is proportional to the amount of the element present in the sample under measurement, the measured X-ray intensity (in cps/µA) of silicon, denoted by S, is in a proportional relationship to the total amount of silicon. Here, the thickness of each standard sample is calculated by the same procedure as used to calculate the average thickness T, which will be described below, and the X-ray intensity S measured by X-ray fluorescence analysis is divided by the thickness of the standard sample to determine the X-ray intensity S per unit thickness. A calibration curve is then created by plotting the known total silicon content and the X-ray intensity S per unit thickness. Next, for the laminated body according to the present invention, the X-ray intensity S per unit thickness is determined in the same manner from X-ray fluorescence analysis and the average thickness T, and the value obtained is used in combination with the calibration curve to calculate the total silicon content. From this total silicon content, the total number of moles of all silicon atoms contained in the linear polysiloxane and all silicon alkoxides is determined and converted into the mass of SiO₂ to show the total mass content S of the protective layer inorganic components, followed by determining the contents of the water soluble resin and various inorganic components.

Among the inorganic components in the protective layer, the mixing ratio between the linear polysiloxane and the silicon alkoxides can be measured based on observation by the aforementioned laser Raman spectroscopy technique. Specifically, the ratio of A2/A1, where A1 is the area of the Raman band attributed to random network structures and A2 is the area of the Raman band attributed to the linear polysiloxane, represents the mixing ratio of the linear polysiloxane to all silicon alkoxides (mass ratio in terms of SiO₂).

Then, after determining the mixing ratio of the water soluble resin and the linear polysiloxane / all silicon alkoxides (mass ratio in terms of SiO₂) by the above method, five types of standard samples that have different known solid contents of silicon alkoxides having ureido groups, among the various solid components attributed to the different silicon alkoxides present in the composition of the sample, are prepared, and each sample is subjected to X-ray fluorescence analysis in the same manner as described above while detecting the generation of X-rays. Here, the X-ray intensity S (in cps/µA) of silicon differs depending on the difference in the solid contents accounted for by the silicon alkoxides having ureido groups. In the same way as described above, the thickness of the standard sample is calculated by the same procedure as used for the average thickness T, which will be described later, and a calibration curve is created by plotting the known solid contents of the silicon alkoxides having ureido groups and the X-ray intensity S per unit thickness. Subsequently, for the laminated body according to the present invention, the X-ray intensity S per unit thickness is determined in the same manner from X-ray fluorescence analysis and the average thickness T, and the value thus obtained is used in combination with the calibration curve to calculate the solid content accounted for by each silicon alkoxide having a ureido group.

### [Printing ink-layered laminated body]

The printing ink-layered laminated body according to the present invention is a laminated body produced by laying printing ink to form a printing ink layer on the protective layer side of a laminated body. In addition, another printing ink layer may also be laid on the side opposite to the protective layer side of the laminated body, thereby forming printing ink layers on both sides of the laminated body. In general, a printing ink layer is formed for the purpose of displaying information about the content or imparting light shielding properties, decorative properties, aesthetic properties, and the like, and therefore, it consists mainly of a colorant and a resin. If necessary, it may also contain any desirable additive, and examples thereof include curing agent, lubricant, anti-blocking agent, leveling agent, defoaming agent, pigment dispersant, silane coupling agent, ultraviolet absorber, rust inhibitor, plasticizer, flame retardant, reinforcing agent, antistatic agent, and viscosity modifier. There are no particular limitations on the colorant to use and an appropriate one may be selected from inorganic pigments, organic pigments, dyes, and the like. Examples of the resin include, but not limited to, castor oil, polyester resin, polyurethane resin, epoxy resin, (meth)acrylic resin, melamine resin, polystyrene resin, phenolic resin, polyvinyl chloride resin, polyvinyl acetate resin, polyamide resin, nitrocellulose, polymeric acrylate compounds, and mixtures thereof. Furthermore, to form a printing ink layer as described above, any appropriate method may be used and good examples include letterpress printing, gravure printing, offset printing, flexographic printing, and screen printing. There are commercially available printing inks that can be used and examples thereof include LP Bio Series and Rio Alpha S Series, which are gravure ink products designed for backing-up printing, manufactured by Toyo Ink Co., Ltd.; Finart S Series and Finart BM Series, manufactured by DIC Corporation; BelleColor Series and BelleFlora Series, manufactured by Sakata INX Corporation; Lamic SR Series, Lamic BP Series, and NB300BP Series, manufactured by Dainichiseika Color & Chemicals Mfg. Co., Ltd.; and LG-NT Series, manufactured by Tokyo Ink Co., Ltd.

### [Packaging material]

The packaging material according to the present invention is formed by laying a heat-sealable thermoplastic resin on at least one side of the laminated body or the printing ink-layered laminated body according to the present invention, with an adhesive layer of an adhesive etc. interposed in between, and then shaped into a bag with the thermoplastic resin-laid surface on the inside. Another layer may be added on the opposite side to the aforementioned thermoplastic resin-laid surface or between the laminated body or the printing ink-layered laminated body according to the present invention and the thermoplastic resin. Examples thereof include a resin film (such as a polyester film, polyamide film, and polypropylene film), the laminated body or the printing ink-layered laminated body according to the present invention, one of various vapor deposited films, a functional resin film such as a polyvinylidene chloride-coated film, and a thermoplastic film. Examples of adhesives that are useful to form the adhesive layer include one-component or two-component curable vinyl, (meth)acrylic, polyamide, polyester, polyether, polyurethane, epoxy, or rubber type solventbased, water-based, or emulsion-based adhesives. Commercially available products include TM-570/CAT-RT37, which is a two-component type polyester based adhesive product manufactured by Toyo Ink Co., Ltd.; LX500/KO55, manufactured by DIC Corporation; RU-77T/H-7, manufactured by Rock Paint Co., Ltd.; A-620/A-6, manufactured by Mitsui Chemicals, Inc.; A4210R/CA75, manufactured by Dainichiseika Color & Chemicals Mfg. Co., Ltd.; and LA2760/LA5891, manufactured by Henkel. In addition, PASLIM VM001/VM108CP, manufactured by DIC Corporation, can also be useful for the purpose of achieving improved gas barrier properties.

To apply the adhesives listed above, good coating methods include, but not limited to, the direct gravure coating method, reverse roll coating method, kiss coating method, and fountain coating method. Regarding the coating rate, it is preferable that the resulting dried coat will preferably have a weight of 0.1 g/m² or more and 10 g/m² or less, more preferably 1 g/m² or more and 5 g/m² or less. Good examples of the thermoplastic resin include polyethylene based resins, polypropylene based resins, and cyclic polypropylene based resins, as well as copolymer resins and mixed resins that contain any of these resins as the main component. Examples of useful ones increase low density polyethylene (LDPE), medium density polyethylene (MDPE), high density polyethylene (HDPE), straight-chain (linear) low density polyethylene (LLDPE), polypropylene (PP), ethylene-α-olefin copolymer polymerized with a metallocene catalyst, random or block copolymer of ethylene and polypropylene, ethylene-vinyl acetate copolymer (EVA), ethylene-acrylic acid copolymer (EAA), ethylene-ethyl acrylate copolymer (EEA), ethylene-methacrylic acid copolymer (EMAA), ethylene-methyl methacrylate copolymer (EMMA), ethylene-maleic acid copolymer, and ionomer resin, as well as acid-modified polyolefin based resins produced by modifying these polyolefin based resins with unsaturated carboxylic acids such as acrylic acid, methacrylic acid, maleic acid, maleic anhydride, fumaric acid, or the like. The inclusion of the laminated body or the printing ink-layered laminated body according to the present invention allows the packaging material according to the present invention to have good adhesion properties and gas barrier properties and work for safely preserving the contents without suffering defects such as delamination occurring after filling with the content. Thus, the packaging material is resistant to delamination that is likely to be caused by heat during boiling/retorting or by acids such as acidic contents in cases where it contains acidic contents.

### [Applications]

The laminated body according to the present invention is characterized by exhibiting high adhesion and gas barrier performances. In addition, it can serve favorably to produce a packaging material that includes it.

### EXAMPLES

The present invention will now be illustrated more specifically with reference to examples, though the invention should not be construed as being limited thereto.

### (1) Component analysis and structural identification of protective layer (water soluble resin, linear polysiloxane, silicon alkoxide having a ureido group)

The protective layer was peeled off from a sample and dissolved in a solvent that is capable of dissolving it. Then, the resulting solution was filtered to separate particles from the filtrate. As required, each component substance present in the protective layer and in the resin layer was separated and purified by means of a generally known chromatographic technique such as silica gel column chromatography, gel permeation chromatography, and high performance liquid chromatography. Subsequently, DMSO-d₆ added to each single substance and heated to 60°C to ensure dissolution, and the resulting solution was subjected to nuclear magnetic resonance spectroscopy for ¹H-NMR and ¹³C-NMR observation. Then, for each single substance, qualitative analysis was conducted by means of an appropriate combination of IR spectroscopy (infrared spectroscopy) and various mass spectrometry methods (gas chromatography-mass spectrometry (GC-MS), pyrolysis gas chromatography-mass spectrometry (pyrolysis GC-MS), matrix-assisted laser desorption/ionization mass spectrometry (MALDI-MS), time-of-flight mass spectrometry (TOF-MS), matrix-assisted laser desorption ionization-time of flight mass spectrometry (MALDI-TOF-MS), dynamic secondary ion mass spectrometry (dynamic SIMS), and time-of-flight secondary ion mass spectrometry (TOF-SIMS)), thereby determining the components and identifying the structure present in the sample. Here, when combining these qualitative analysis methods, an effective combination of the smallest number thereof was identified and used preferentially.

### (2) Average thickness of protective layer and total thickness of inorganic compound layer

The average thickness of the protective layer and the total thickness of the inorganic compound layer were determined based on observation of their cross sections under a TEM (transmission electron microscope). First, a specimen for cross-sectional observation was prepared by the FIB technique using a microsampling system (FB-2000A, manufactured by Hitachi, Ltd.) (specifically, according to the procedure described in "Kobunshi Hyomen Kakogaku", Satoru Iwamori, pp. 118-119). Next, using a transmission electron microscope (H-9000UHRII, manufactured by Hitachi, Ltd.), observation was performed at an accelerating voltage of 300 kV. A prepared cross section was observed at an observation magnification that was adjusted so that the thickness of the layer accounted for a proportion of 30% to 70% in the cross-sectional image. In the same manner as above, a total of five samples were examined and the five measurements taken from the samples were averaged and were converted into nanometers (nm). Thus, their average thickness and the total thickness of the inorganic compound layer were determined.

### (3) Measurement of content ratio between water soluble resin and inorganic components (linear polysiloxane, silicon alkoxide) in protective layer

Polyvinyl alcohol (hereinafter occasionally abbreviated as PVA, polymerization degree 1,700, saponification degree 98.5%) used as the water soluble resin component and hydrolysates of tetraalkoxysilane (hereinafter occasionally abbreviated as TEOS) used as the inorganic component were mixed in such a manner that the content ratio between the water soluble resin and the inorganic component (the mass of the inorganic component was converted in terms of SiO₂) was 80/20, 65/35, 50/50, 35/65, or 20/80. Films prepared in this way were adopted as standard samples with different content ratios.

Then, each standard sample was examined using a X-ray fluorescence analysis instrument (EDX-700, manufactured by Shimadzu Corporation) to measure the intensity Kα of the characteristic X-ray of silicon, and the X-ray intensity S (in cps/µA) was determined. The thickness of each standard sample was measured by the procedure described in the above section (2), and the X-ray intensity S per unit thickness was calculated, followed by drawing a calibration curve that shows the relationship between the content of the water soluble resin and that of the inorganic component (the content of the inorganic component was converted in terms of SiO²).

Subsequently, for the laminated body according to the present invention, the X-ray intensity S per unit thickness was determined in the same manner from X-ray fluorescence observation and the average thickness T, and the value obtained was used in combination with the calibration curve to determine the contents of the water soluble resin and that of the inorganic component.

### (4) Analysis of bonding state of silicon (existence or absence of linear polysiloxane) (mixing ratio of linear polysiloxane to silicon alkoxide (ratio by mass in terms of SiO₂))

The protective layer of the laminated body was separated by cutting, and analyzed by Raman spectroscopy under the conditions specified below.
Measurement instrument: T64000, manufactured by Atago-Jobin Yvon
Measurement mode: microscopic Raman spectroscopy
Objective lens: 100x
Beam diameter: 1 µm
Light source: Ar⁺ laser 514.5 nm
Laser power: 200 mW
Diffraction grating: single 600 gr/mm
Slit: 100 µm
Detector: CCD (1,024 × 256), manufactured by Jobin Yvon

Described below are the analysis conditions for the Raman spectrum used to calculate the area A1 that represents the random network structure consisting of silicon alkoxide and the area A2 that represents linear polysiloxane. The Raman spectrum obtained was analyzed using spectral analysis software GRAMS/Thermo Scientific. After performing baseline correction of the Raman spectrum by collinear approximation, curve fitting was conducted in the range of 600 to 250 cm⁻¹. The fitting was performed separately for the following three components: four-membered ring structure (peak wavenumber 495 cm⁻¹, half-width 35 cm⁻¹), linear polysiloxane (peak wavenumber 488 cm⁻¹, half-width 35 cm⁻¹), and random network structure of silicon alkoxide. The random network structure of silicon alkoxide gives a broad peak that reflects its continuous structure. Therefore, automatic fitting was conducted by means of Gaussian function approximation for separating the three components of the four-membered ring structure, linear polysiloxane, and the random network structure of silicon alkoxide.

The bands determined and the area enclosed by the baseline were calculated to see whether or not there existed a linear polysiloxane and in addition, the ratio of A2/A1 (the mixing ratio of linear polysiloxane to silicon alkoxide (ratio by mass in terms of SiO₂)), where A1 is the area attributed to the random network structure of silicon alkoxide and A2 is the area attributed to linear polysiloxane was calculated.

### (5) Solid content ratio of silicon alkoxides having ureido groups to total solid content of protective layer

The mixing ratios (ratios by mass in terms of SiO₂) of the water soluble resin and linear polysiloxane/all silicon alkoxides were determined according to the procedures described in sections (3) and (4) above. Subsequently, among the solid components that correspond to silicon alkoxides contained in the composition, those silicon alkoxides having ureido groups were identified and five types of standard samples that contained them at different known solid content concentrations were prepared. Each sample was subjected to X-ray fluorescence analysis in the same manner as in the above section (3) to measure the amount of X-ray generated. In the same manner as in the above sections (2) and (3), a calibration curve was created by plotting the solid content of a silicon alkoxide having a ureido group and the X-ray intensity S per unit thickness.

Then, for the laminated body according to the present invention, the X-ray intensity S per unit thickness was determined in the same manner from X-ray fluorescence observation and the average thickness T, and the value thus obtained was used in combination with the calibration curve to determine the solid content of the silicon alkoxide having a ureido group.

### (6) Gas barrier properties (oxygen barrier properties: oxygen transmission rate, water vapor barrier properties: water vapor transmission rate)

Samples of the laminated body according to the present invention were prepared. Then, the oxygen transmission rate (occasionally abbreviated as OTR)) was measured under the conditions of a temperature of 23°C and a humidity of 90%RH using an oxygen transmission rate measuring apparatus (OX-TRAN (registered trademark) 2/21, manufactured by Mocon) according to JIS K7126-2 (2006). Two test pieces were prepared and two measurements were taken from each of them. The average of the total of four measurements was adopted as the oxygen transmission rate of the laminated body according to the present invention. The water vapor transmission rate (occasionally abbreviated as WVTR) was measured under the conditions of a temperature of 40°C and a humidity of 90%RH using a water vapor transmission rate measuring apparatus (PERMATRAN (registered trademark) W 3/31, manufactured by Mocon) according to JIS K7129-2 (2019). Two test pieces were prepared and two measurements were taken from each of them. The average of the total of four measurements was adopted as the water vapor transmission rate of the laminated body according to the present invention.

Subsequently, an unstretched polypropylene film (ZK100, manufactured by Toray Advanced Film Co., Ltd.) with a thickness of 60 µm was attached to the the protective layer side of the laminated body according to the present invention with an adhesive composed of a polyester urethane based main agent (LX500, manufactured by DIC Corporation) and an aliphatic isocyanate based curing agent (KO55, manufactured by DIC Corporation), which was interposed between them, thereby preparing a laminated film for barrier properties evaluation. Then, the laminated film for barrier properties evaluation was subjected to retort sterilization treatment (high temperature hot water treatment) at 135°C for 30 minutes to produce a retorttreated laminated film for barrier properties evaluation. According to the same procedure as applied to the laminated body, two test pieces were prepared and two measurements were taken from each of them. The average of the total of four measurements was adopted as the post-retorting oxygen transmission rate or the post-retorting water vapor transmission rate for the present invention.

### (7) Adhesion evaluation (lamination strength of ink layer)

Adhesion evaluation for laminated bodies was carried out according to the procedure described below.

On the protective layer side of the laminated body, white printing ink (BelleColor R White 115DT, manufactured by Sakata INX Corporation) was gravure-printed in a solid pattern in such a manner that the dry thickness of the printing ink would be 1 µm, thereby producing an printing ink-layered laminated body. Subsequently, the surface of a stretched nylon film with a thickness of 15 µm (Emblem ONUM, manufactured by Unitika Ltd.) was subjected to corona treatment, and an adhesive composed of a polyester urethane based main agent (LX500, manufactured by DIC Corporation) and an aliphatic isocyanate curing agent (KO55, manufactured by DIC Corporation) was spread over the treated surface in such a manner that the adhesive would form a cured layer of 3 g/m². The surface was attached to the printing ink side of the printing ink-layered laminated body, thereby producing a laminated film for adhesion evaluation between the printing ink-layered laminated body and the stretched nylon film. Then, the laminated film for adhesion evaluation was cut to 15 mm in width and 150 mm in length to prepare cut samples. Using a tensile tester (Tensilon), the peel strength was measured at a peel rate of 50 mm/min with a 180° peel angle at the interface between the protective layer and the printing ink layer in the printing ink-layered laminated body. Measurements were taken from three samples by the above measurement method, and the average of these measurements was adopted as the initial lamination strength. Furthermore, the laminated film for adhesion evaluation was subjected to retort sterilization treatment at 135°C for 30 minutes, and then cut to 15 mm in width and 150 mm in length to prepare cut samples. Using the same measurement method as described above, the peel strengths of three samples were measured, and the average of these measurements was adopted as the post-retorting lamination strength.

### [Example 1]

### <Inorganic compound layer>

A biaxially stretched polyethylene terephthalate film (LUMIRROR (registered trademark) P60, manufactured by Toray Industries, Inc.), having a thickness of 12 µm was used as a base film, and an aluminum oxide layer having a thickness of 15 nm was deposited thereon by the vacuum deposition technique to form an inorganic compound layer.

### <Protective layer>

### (Solution of organic component)

Polyvinyl alcohol (hereinafter occasionally referred to as PVA, polymerization degree 1,700, saponification degree 98.5%), used as water soluble resin component, was added into a solvent composed of water and isopropyl alcohol mixed at 97/3 by mass, and heated while stirring at 90°C to provide a solution of an organic component having a solid content of 12 mass%.

### (Solution of inorganic component)

Asolution was prepared by mixing 11.7 g of KBM-585A (manufactured by Shin-Etsu Chemical Co., Ltd.), which is a silicon alkoxide having a ureido group, and 4.7 g of methanol, and then, 18.6 g of aqueous 0.02N hydrochloric acid solution was added dropwise while stirring, thereby providing a hydrolysis solution of a silicon alkoxide having a ureido group (hydrolysis solution A).

Subsequently, another solution was prepared by mixing 11.2 g of Ethyl Silicate 40 (manufactured by Colcoat Co., Ltd., linear oligomer with average length of pentamer), which is linear polysiloxane, and 16.9 g of methanol, and then, 7.0 g of aqueous 0.06N hydrochloric acid solution was added dropwise to provide a hydrolysis solution of a pentamer silicate (hydrolysis solution B).

### (Formation of protective layer)

The solution of an organic component, hydrolysis solution A, and hydrolysis solution B was formed in such a manner that the content of PVA was 20 mass%, that the silicon alkoxide having a ureido group accounted for a solid content of 2.0%, and that the mass ratio (in terms of SiO₂) between the linear polysiloxane and the silicon alkoxide was 97/3. The mixture was stirred and then diluted with water to provide a coating solution having a solid content of 12 mass%. This coating solution was applied to the inorganic compound layer and dried at 150°C to form a protective layer having an average thickness of 100 nm after drying, thereby providing a laminated body.

### [Example 2]

### <Inorganic compound layer>

In the same manner as in Example 1, an inorganic compound layer was prepared.

### <Protective layer>

### (Solution of organic component)

A modified polyvinyl alcohol that includes γ-butyrolactone having a lactone structure as a carbonyl group-containing cyclic structure (hereinafter occasionally referred to as modified PVA, polymerization degree 1,700, saponification degree 93.0%), adopted as water soluble resin component, was added into a solvent composed of water and isopropyl alcohol mixed at 97/3 by mass, and the mixture was heated while stirring at 90°C to provide a solution of an organic component having a solid content of 12 mass%.

### (Solution of inorganic component)

In the same manner as in Example 1, a hydrolysis solution of a silicon alkoxide having a ureido group (hydrolysis solution A) and a hydrolysis solution of a pentamer silicate (hydrolysis solution B) were prepared.

### (Formation of protective layer)

The solution of an organic component, hydrolysis solution A, and hydrolysis solution B was formed in such a manner that the content of the modified PVA was 20 mass%, that the silicon alkoxide having a ureido group accounted for a solid content of 2.0%, and that the mass ratio (in terms of SiO₂) between the linear polysiloxane and silicon alkoxide was 97/3. The mixture was stirred and then diluted with water to provide a coating solution having a solid content of 12 mass%. This coating solution was applied to the inorganic compound layer and dried at 150°C to form a protective layer having an average thickness of 100 nm after drying, thereby providing a laminated body.

### [Example 3]

### <Inorganic compound layer>

In the same manner as in Example 1, an inorganic compound layer was prepared.

### <Protective layer>

### (Solution of organic component)

In the same manner as in Example 2, a solution containing modified PVA as organic component was prepared.

### (Solution of inorganic component)

In the same manner as in Example 1, a hydrolysis solution of a silicon alkoxide having a ureido group (hydrolysis solution A) was prepared.

Then, a solution composed of 11.2 g of Ethyl Silicate 48 (manufactured by Colcoat Co., Ltd., linear oligomer with average length of decamer), which is a linear polysiloxane, and 16.9 g of methanol was prepared, and 7.0 g of aqueous 0.06N hydrochloric acid solution was added dropwise to provide a hydrolysis solution of a decamer silicate (hydrolysis solution B).

### (Formation of protective layer)

The solution of an organic component, hydrolysis solution A, and hydrolysis solution B was formed in such a manner that the content of the modified PVA was 30 mass%, that the silicon alkoxide having a ureido group accounted for a solid content of 3.2%, and that the mass ratio (in terms of SiO₂) between the linear polysiloxane and silicon alkoxide was 95/5. The mixture was stirred and then diluted with water to provide a coating solution having a solid content of 12 mass%. This coating solution was applied to the inorganic compound layer and dried at 150°C to form a protective layer having an average thickness of 350 nm after drying, thereby providing a laminated body.

### [Example 4]

### <Inorganic compound layer>

In the same manner as in Example 1, an inorganic compound layer was prepared.

### <Protective layer>

### (Solution of organic component)

In the same manner as in Example 2, a solution containing modified PVA as organic component was prepared.

### (Solution of inorganic component)

In the same manner as in Example 1, a hydrolysis solution of a silicon alkoxide having a ureido group (hydrolysis solution A) was prepared.

Then, a solution composed of 11.2 g of Methyl Silicate 51 (manufactured by Colcoat Co., Ltd., linear oligomer with average length of tetramer), which is a linear polysiloxane, and 16.9 g of methanol was prepared, and 7.0 g of aqueous 0.06N hydrochloric acid solution was added dropwise to provide a hydrolysis solution of a teramer silicate (hydrolysis solution B).

Then, a solution was prepared by mixing 11.7 g of KBE-04 (tetraethoxysilane, manufactured by Shin-Etsu Chemical Co., Ltd.), which is a silicon alkoxide having no ureido group, and 4.7 g of methanol, and then, 18.6 g of aqueous 0.02N hydrochloric acid solution was added dropwise while stirring, thereby providing a hydrolysis solution of a silicon alkoxide having no ureido group (hydrolysis solution C).

### (Formation of protective layer)

The solution of an organic component, hydrolysis solution A, hydrolysis solution B, and hydrolysis solution C was formed in such a manner that the content of the modified PVA was 30 mass%, that the silicon alkoxide having a ureido group accounted for a solid content of 3.2%, and that the mass ratio (in terms of SiO₂) between the linear polysiloxane and all silicon alkoxides was 15/85. The mixture was stirred and then diluted with water to provide a coating solution having a solid content of 12 mass%. This coating solution was applied to the inorganic compound layer and dried at 150°C to form a protective layer having an average thickness of 500 nm after drying, thereby providing a laminated body.

### [Example 5]

### <Inorganic compound layer>

In the same manner as in Example 1, an inorganic compound layer was prepared.

### <Protective layer>

### (Solution of organic component)

In the same manner as in Example 2, a solution containing modified PVA as organic component was prepared.

### (Solution of inorganic component)

In the same manner as in Example 1, a hydrolysis solution of a silicon alkoxide having a ureido group (hydrolysis solution A) was prepared.

Then, a solution composed of 11.2 g of Methyl Silicate 53A (manufactured by Colcoat Co., Ltd., linear oligomer with average length of heptamer), which is a linear polysiloxane, and 16.9 g of methanol was prepared, and 7.0 g of aqueous 0.06N hydrochloric acid solution was added dropwise to provide a hydrolysis solution of a heptamer silicate (hydrolysis solution B).

Then, in the same manner as in Example 4, a hydrolysis solution of a silicon alkoxide having no ureido group (hydrolysis solution C) was prepared.

### (Formation of protective layer)

The solution of an organic component, hydrolysis solution A, hydrolysis solution B, and hydrolysis solution C was formed in such a manner that the content of the modified PVA was 30 mass%, that the silicon alkoxide having a ureido group accounted for a solid content of 3.2%, and that the mass ratio (in terms of SiO₂) between the linear polysiloxane and all silicon alkoxides was 15/85. The mixture was stirred and then diluted with water to provide a coating solution having a solid content of 12 mass%. This coating solution was applied to the inorganic compound layer and dried at 150°C to form a protective layer having an average thickness of 500 nm after drying, thereby providing a laminated body.

### [Example 6]

### <Inorganic compound layer>

In the same manner as in Example 1, an inorganic compound layer was prepared.

### <Protective layer>

### (Solution of organic component)

In the same manner as in Example 2, a solution containing modified PVA as organic component was prepared.

### (Solution of inorganic component)

In the same manner as in Example 1, a hydrolysis solution of a silicon alkoxide having a ureido group (hydrolysis solution A) was prepared.

Then, in the same manner as in Example 3, a hydrolysis solution of a decamer silicate (hydrolysis solution B) was prepared.

Then, in the same manner as in Example 4, a hydrolysis solution of a silicon alkoxide having no ureido group (hydrolysis solution C) was prepared.

### (Formation of protective layer)

The solution of an organic component, hydrolysis solution A, hydrolysis solution B, and hydrolysis solution C was formed in such a manner that the content of the modified PVA was 50 mass%, that the silicon alkoxide having a ureido group accounted for a solid content of 5.5%, and that the mass ratio (in terms of SiO₂) between the linear polysiloxane and all silicon alkoxides was 50/50. The mixture was stirred and then diluted with water to provide a coating solution having a solid content of 12 mass%. This coating solution was applied to the inorganic compound layer and dried at 150°C to form a protective layer having an average thickness of 250 nm after drying, thereby providing a laminated body.

### [Example 7]

### <Inorganic compound layer>

In the same manner as in Example 1, an inorganic compound layer was prepared.

### <Protective layer>

### (Solution of organic component)

In the same manner as in Example 2, a solution containing modified PVA as organic component was prepared.

### (Solution of inorganic component)

In the same manner as in Example 1, a hydrolysis solution of a silicon alkoxide having a ureido group (hydrolysis solution A) was prepared.

Then, in the same manner as in Example 3, a hydrolysis solution of a decamer silicate (hydrolysis solution B) was prepared.

Then, in the same manner as in Example 4, a hydrolysis solution of a silicon alkoxide having no ureido group (hydrolysis solution C) was prepared.

### (Formation of protective layer)

The solution of an organic component, hydrolysis solution A, hydrolysis solution B, and hydrolysis solution C was formed in such a manner that the content of the modified PVA was 30 mass%, that the silicon alkoxide having a ureido group accounted for a solid content of 8.4%, and that the mass ratio (in terms of SiO₂) between the linear polysiloxane and all silicon alkoxides was 60/40. The mixture was stirred and then diluted with water to provide a coating solution having a solid content of 12 mass%. This coating solution was applied to the inorganic compound layer and dried at 150°C to form a protective layer having an average thickness of 250 nm after drying, thereby providing a laminated body.

### [Example 8]

### <Inorganic compound layer>

In the same manner as in Example 1, an inorganic compound layer was prepared.

### <Protective layer>

### (Solution of organic component)

In the same manner as in Example 2, a solution containing modified PVA as organic component was prepared.

### (Solution of inorganic component)

In the same manner as in Example 1, a hydrolysis solution of a silicon alkoxide having a ureido group (hydrolysis solution A) was prepared.

Then, in the same manner as in Example 3, a hydrolysis solution of a decamer silicate (hydrolysis solution B) was prepared.

Then, in the same manner as in Example 4, a hydrolysis solution of a silicon alkoxide having no ureido group (hydrolysis solution C) was prepared.

### (Formation of protective layer)

The solution of an organic component, hydrolysis solution A, hydrolysis solution B, and hydrolysis solution C was formed in such a manner that the content of the modified PVA was 30 mass%, that the silicon alkoxide having a ureido group accounted for a solid content of 8.4%, and that the mass ratio (in terms of SiO₂) between the linear polysiloxane and all silicon alkoxides was 40/60. The mixture was stirred and then diluted with water to provide a coating solution having a solid content of 12 mass%. This coating solution was applied to the inorganic compound layer and dried at 150°C to form a protective layer having an average thickness of 250 nm after drying, thereby providing a laminated body.

### [Example 9]

### <Inorganic compound layer>

In the same manner as in Example 1, an inorganic compound layer was prepared.

### <Protective layer>

### (Solution of organic component)

In the same manner as in Example 2, a solution containing modified PVA as organic component was prepared.

### (Solution of inorganic component)

In the same manner as in Example 1, a hydrolysis solution of a silicon alkoxide having a ureido group (hydrolysis solution A) was prepared.

Then, in the same manner as in Example 3, a hydrolysis solution of a decamer silicate (hydrolysis solution B) was prepared.

Then, in the same manner as in Example 4, a hydrolysis solution of a silicon alkoxide having no ureido group (hydrolysis solution C) was prepared.

### (Formation of protective layer)

The solution of an organic component, hydrolysis solution A, hydrolysis solution B, and hydrolysis solution C was formed in such a manner that the content of the modified PVA was 30 mass%, that the silicon alkoxide having a ureido group accounted for a solid content of 7.8%, and that the mass ratio (in terms of SiO₂) between the linear polysiloxane and all silicon alkoxides was 40/60. The mixture was stirred and then diluted with water to provide a coating solution having a solid content of 12 mass%. This coating solution was applied to the inorganic compound layer and dried at 150°C to form a protective layer having an average thickness of 250 nm after drying, thereby providing a laminated body.

### [Example 10]

### <Inorganic compound layer>

In the same manner as in Example 1, an inorganic compound layer was prepared.

### <Protective layer>

### (Solution of organic component)

In the same manner as in Example 2, a solution containing modified PVA as organic component was prepared.

### (Solution of inorganic component)

In the same manner as in Example 1, a hydrolysis solution of a silicon alkoxide having a ureido group (hydrolysis solution A) was prepared.

Then, in the same manner as in Example 3, a hydrolysis solution of a decamer silicate (hydrolysis solution B) was prepared.

Then, in the same manner as in Example 4, a hydrolysis solution of a silicon alkoxide having no ureido group (hydrolysis solution C) was prepared.

### (Formation of protective layer)

The solution of an organic component, hydrolysis solution A, hydrolysis solution B, and hydrolysis solution C was formed in such a manner that the content of the modified PVA was 30 mass%, that the silicon alkoxide having a ureido group accounted for a solid content of 3.2%, and that the mass ratio (in terms of SiO₂) between the linear polysiloxane and all silicon alkoxides was 40/60. The mixture was stirred and then diluted with water to provide a coating solution having a solid content of 12 mass%. This coating solution was applied to the inorganic compound layer and dried at 150°C to form a protective layer having an average thickness of 250 nm after drying, thereby providing a laminated body.

### [Example 11]

### <Inorganic compound layer>

A biaxially stretched polyethylene terephthalate film (LUMIRROR (registered trademark) P60, manufactured by Toray Industries, Inc.), which has a thickness of 12 µm, was adopted as base film, and aluminum was deposited on this base film in a roll-to-roll vacuum deposition apparatus. A high frequency induction heating type aluminum evaporation source equipped with a crucible was used to evaporate and deposit aluminum on the base film while unwinding it. In the path along which the base film traveled while receiving evaporated aluminum, oxygen gas was supplied to a position highly close to the take-up side so that a continuous inorganic layer was formed in such a manner that the aluminum metal layer had a thickness of 40 nm while the aluminum oxide layer had a thickness of 4 nm. The measurement of the aluminum metal layer thickness and the aluminum oxide layer thickness was conducted by the following procedure.

First, compositional analysis in the depth direction was conducted by X-ray photoelectron spectroscopy (XPS) and the inorganic film structure was determined based on depth profiles. Here, for metal elements, the oxide components and metal components were separated in developing profiles. After starting ion etching from the surface of the resin layer or the surface of the protective layer, data collection was continued until the base was reached, and the resulting depth profile of each element was used to examine the presence or absence of a continuous increase or decrease in its amount. Here, regarding the presence or absence of a continuous increase or decrease, the existence of a continuous increase or decrease was determined according to whether the length of the increase or decrease continued over 2 nm or more.

The measuring conditions used were as described below.
- Instrument: X-ray photoelectron spectrometer (Quantera SXM, manufactured by PHI)
- Excited X-ray: monochromatic AlKα_{1,2} radiation (1486.6 eV)
- X-ray diameter: 100 µm
- Photoelectron take-off angle: 45° (inclination of detector from specimen surface)
- Ion etching conditions: Ar⁺ ion 3 kV
   raster size: 2 × 2 mm (etching region)
   etching rate: 12.0 nm/min

Subsequently, the total thickness of the inorganic layer was determined by the procedure described above. The film thicknesses of the aluminum metal layer and the aluminum oxide layer were calculated from the total thickness of the inorganic layer and the region attributed to the inorganic layer in the depth profile.

### <Protective layer>

### (Solution of organic component)

In the same manner as in Example 2, a solution containing modified PVA as organic component was prepared.

### (Solution of inorganic component)

In the same manner as in Example 1, a hydrolysis solution of a silicon alkoxide having a ureido group (hydrolysis solution A) was prepared.

Then, in the same manner as in Example 3, a hydrolysis solution of a decamer silicate (hydrolysis solution B) was prepared.

Then, in the same manner as in Example 4, a hydrolysis solution of a silicon alkoxide having no ureido group (hydrolysis solution C) was prepared.

### (Formation of protective layer)

The solution of an organic component, hydrolysis solution A, hydrolysis solution B, and hydrolysis solution C was formed in such a manner that the content of the modified PVA was 30 mass%, that the silicon alkoxide having a ureido group accounted for a solid content of 3.2%, and that the mass ratio (in terms of SiO₂) between the linear polysiloxane and all silicon alkoxides was 40/60. The mixture was stirred and then diluted with water to provide a coating solution having a solid content of 12 mass%. This coating solution was applied to the inorganic compound layer and dried at 150°C to form a protective layer having an average thickness of 250 nm after drying, thereby providing a laminated body.

### [Comparative example 1]

An evaluation was conducted for a laminated body having the same inorganic compound layer as in Example 1 but not having a protective layer. The laminated body was found to be inferior in terms of gas barrier properties, post-retorting gas barrier properties, and adhesion properties.

### [Comparative example 2]

### <Inorganic compound layer>

In the same manner as in Example 1, an inorganic compound layer was prepared.

### <Protective layer>

### (Solution of organic component)

Omitted.

### (Solution of inorganic component)

In the same manner as in Example 1, a hydrolysis solution of a silicon alkoxide having a ureido group (hydrolysis solution A) was prepared.

Then, in the same manner as in Example 3, a hydrolysis solution of a decamer silicate (hydrolysis solution B) was prepared.

### (Formation of protective layer)

Without using a water soluble resin, a mixture of only hydrolysis solution A and hydrolysis solution B was formed in such a manner that the silicon alkoxide having a ureido group accounted for a solid content of 2.0% and that the mass ratio (in terms of SiO₂) between the linear polysiloxane and the silicon alkoxide was 98/2. The mixture was stirred and then diluted with water to provide a coating solution having a solid content of 12 mass%. This coating solution was applied to the inorganic compound layer and dried at 150°C to form a protective layer containing no water soluble resin and having an average thickness of 350 nm after drying, thereby providing a laminated body. The protective layer suffered the generation of cracks and its evaluation was impossible.

### [Comparative example 3]

### <Inorganic compound layer>

In the same manner as in Example 1, an inorganic compound layer was prepared.

### <Protective layer>

### (Solution of organic component)

In the same manner as in Example 2, a solution containing modified PVA as organic component was prepared.

### (Solution of inorganic component)

In the same manner as in Example 1, a hydrolysis solution of a silicon alkoxide having a ureido group (hydrolysis solution A) was prepared.

Then, in the same manner as in Example 4, a hydrolysis solution of a silicon alkoxide having no ureido group (hydrolysis solution C) was prepared.

### (Formation of protective layer)

The solution of an organic component, hydrolysis solution A, and hydrolysis solution C was formed in such a manner that the content of the modified PVA was 30 mass%, that the silicon alkoxide having a ureido group accounted for a solid content of 3.2%, and that the addition of a linear polysiloxane was omitted. The mixture was stirred and then diluted with water to provide a coating solution having a solid content of 12 mass%. This coating solution was applied to the inorganic compound layer and dried at 150°C to form a protective layer containing no linear polysiloxane and having an average thickness of 350 nm after drying (the mass ratio between linear polysiloxane and silicon alkoxide (in terms of SiO₂) was 0/100), thereby providing a laminated body. This laminated body was inferior in terms of post-retorting gas barrier properties and adhesion properties.

### [Comparative example 4]

### <Inorganic compound layer>

In the same manner as in Example 1, an inorganic compound layer was prepared.

### <Protective layer>

### (Solution of organic component)

In the same manner as in Example 2, a solution containing modified PVA as organic component was prepared.

### (Solution of inorganic component)

In the same manner as in Example 3, a hydrolysis solution of a decamer silicate (hydrolysis solution B) was prepared.

Then, in the same manner as in Example 4, a hydrolysis solution of a silicon alkoxide having no ureido group (hydrolysis solution C) was prepared.

### (Formation of protective layer)

Only hydrolysis solution B and hydrolysis solution C were mixed in such a manner that the content of the modified PVA was 30 mass%, that the addition of a silicon alkoxide having a ureido group was omitted, and that the mass ratio (in terms of SiO₂) between the linear polysiloxane and silicon alkoxide was 40/60. The mixture was stirred and then diluted with water to provide a coating solution having a solid content of 12 mass%. This coating solution was applied to the inorganic compound layer and dried at 150°C to form a protective layer containing no silicon alkoxide having a ureido group and having an average thickness of 350 nm after drying, thereby providing a laminated body, but it was inferior in terms of adhesion properties.

For each Example and Comparative example, the composition of the laminated body is shown in Table 1 and the properties of the laminated body are shown in Table 2.

### [Table 1]

**[Table1]**

| | inorganic compound layer | protective laver | | | | | | | |
|---|---|---|---|---|---|---|---|---|---|
| | | water soluble resin | | linear polysiloxane | silicon alkoxide | | | mass ratio A2/A1 = linear polysiloxane / silicon alkoxide (in terms of SiO₂) | average thickness [nm] |
| | | type | content [mass%] | | silicon alkoxide having ureido group | | other silicon alkoxides | | |
| | | | | | present or absent | solid content [mass%] | | | |
| Example 1 | aluminum oxide | PVA | 20 | linear (pentamer) | present | 2 | absent | 97/3 | 100 |
| Example 2 | aluminum oxide | modified PVA having γ-butyrolactone structure | 20 | linear (pentamer) | present | 2 | absent | 97/3 | 100 |
| Example 3 | aluminum oxide | modified PVA having γ-butyrolactone structure | 30 | linear (decamer) | present | 3.2 | absent | 95/5 | 350 |
| Example 4 | aluminum oxide | modified PVA having γ-butyrolactone structure | 30 | linear (tetramer) | present | 3.2 | TEOS | 15/85 | 500 |
| Example 5 | aluminum oxide | modified PVA having γ-butyrolactone structure | 30 | linear (heptamer) | present | 3.2 | TEOS | 15/85 | 500 |
| Example 6 | aluminum oxide | modified PVA having γ-butyrolactone structure | 50 | linear (decamer) | present | 5.5 | TEOS | 50/50 | 250 |
| Example 7 | aluminum oxide | modified PVA having γ-butyrolactone structure | 30 | linear (decamer) | present | 8.4 | TEOS | 60/40 | 250 |
| Example 8 | aluminum oxide | modified PVA having γ-butyrolactone structure | 30 | linear (decamer) | present | 8.4 | TEOS | 40/60 | 250 |
| Example 9 | aluminum oxide | modified PVA having γ-butyrolactone structure | 30 | linear (decamer) | present | 7.8 | TEOS | 40/60 | 250 |
| Example 10 | aluminum oxide | modified PVA having γ-butyrolactone structure | 30 | linear (decamer) | present | 3.2 | TEOS | 40/60 | 250 |
| Example 11 | aluminum (surface layer: aluminum oxide) | modified PVA having γ-butyrolactone structure | 30 | linear (decamer) | present | 3.2 | TEOS | 40/60 | 250 |
| Comparative example 1 | aluminum oxide | absent | absent | absent | absent | absent | absent | absent | absent |
| Comparative example 2 | aluminum oxide | absent | absent | linear (decamer) | present | 2.0 | absent | 98/2 | 350 |
| Comparative example 3 | aluminum oxide | modified PVA having γ-butyrolactone structure | 30 | absent | present | 3.2 | TEOS | 0/100 | 350 |
| Comparative example 4 | aluminum oxide | modified PVA having γ-butyrolactone structure | 30 | linear (decamer) | absent | absent | TEOS | 40/60 | 350 |

### [Table 2]

**[Table 2]**

| | gas barrier properties of laminated body | | post-retorting gas barrier properties | | adhesion properties | |
|---|---|---|---|---|---|---|
| | OTR [cc/(m²-day)] | WVTR [g/(m²-day)] | OTR [cc/(m²-day)] | WVTR [g/(m²-day)] | lamination strength [N/15mm] | |
| | | | | | initial | post-retort |
| Example 1 | 0.15 | 0.40 | 0.38 | 0.85 | 8.1 | 7.7 |
| Example 2 | 0.13 | 0.37 | 0.32 | 0.81 | 8.2 | 7.8 |
| Example 3 | 0.11 | 0.33 | 0.30 | 0.78 | 8.2 | 8.0 |
| Example 4 | 0.10 | 0.34 | 0.35 | 0.72 | 8.4 | 8.2 |
| Example 5 | 0.02 | 0.30 | 0.28 | 0.50 | 8.5 | 8.2 |
| Example 6 | 0.05 | 0.25 | 0.18 | 0.40 | 8.7 | 8.2 |
| Example 7 | 0.04 | 0.20 | 0.15 | 0.38 | 8.8 | 8.3 |
| Example 8 | 0.03 | 0.21 | 0.20 | 0.40 | 9.0 | 8.5 |
| Example 9 | 0.06 | 0.23 | 0.21 | 0.41 | 8.9 | 8.6 |
| Example 10 | 0.04 | 0.23 | 0.19 | 0.42 | 8.9 | 8.5 |
| Example 11 | 0.03 | 0.12 | 0.47 | 0.72 | 8.7 | 8.1 |
| Comparative example 1 | 1.8 | 2.0 or more | 3.0 or more | 3.0 or more | 7.1 | 5.9 |
| Comparative example 2 | cracking | cracking | cracking | cracking | cracking | cracking |
| Comparative example 3 | 0.5 | 0.34 | 2.0 or more | 2.0 or more | 7.5 | 7.1 |
| Comparative example 4 | 0.04 | 0.22 | 0.22 | 0.40 | 7.3 | 7.0 |

As seen clearly from the results obtained in these Examples, the laminated body according to the invention had good gas barrier properties and good adhesion properties.

The use of a protective layer that contains a water soluble polymer, a linear polysiloxane, and a silicon alkoxide having a ureido group (Example 1) served to improve both the initial and post-retorting adhesion properties and gas barrier properties as compared with cases where no protective layer was present (Comparative example 1) or where a protective layer was present but devoid of any of the above components (Comparative examples 2 to 4).

Furthermore, as compared with Example 1, better gas barrier properties were realized when the water soluble resin present in the protective layer was a vinyl based polymer having a carbonyl group in a cyclic structure (Example 2), and in addition, not only the gas barrier properties but also the adhesion properties improved when the silicon alkoxide having a ureido group accounted for a solid content of 2.5% or more relative to the total solid content of the protective layer (Example 3).

The adhesion properties and the post-retorting gas barrier properties also improved when the protective layer contained a silicon alkoxide having no ureido group and when a specific type linear polysiloxane (tetramer, heptamer, etc.) or an appropriate average thickness was adopted in the protective layer (Examples 4 and 5). Furthermore, it was possible to vary various properties while ensuring improvement in adhesion properties, gas barrier properties, and post-retorting durability characteristics (adhesion properties, gas barrier properties) by properly changing the solid content accounted for by the silicon alkoxide having an ureido group in the protective layer or mass ratio between the linear polysiloxane and all silicon alkoxides as converted in terms of SiO₂ (Examples 6 to 10). Besides, the effect of the protective layer was also realized regardless of the type of the inorganic compound layer in use (Example 11).

On the other hand, when such a protective layer was not present (Comparative example 1), only inferior adhesion properties and gas barrier properties were achieved, and when the protective layer, if present, contained no water soluble resin (Comparative example 2), the layers laid on the protective layer underwent cracking and made its evaluation impossible. Furthermore, when the protective layer contained no linear polysiloxane (Comparative example 3) or when it contained no silicon alkoxide having a ureido group (Comparative example 4), evaluation results showed inferior gas barrier properties or inferior adhesion properties even when a silicon alkoxide having a ureido group was present.

## Claims

1. A laminated body comprising a base film having an inorganic compound layer and a protective layer laid on at least one side thereof wherein the protective layer includes at least a water soluble polymer, a linear polysiloxane, and a silicon alkoxide having a ureido group.

2. A laminated body as set forth in claim 1, wherein the silicon alkoxide having a ureido group accounts for 2.5 mass% or more of the total solid content of the protective layer.

3. A laminated body as set forth in either claim 1 or 2, wherein the protective layer further comprises a silicon alkoxide having no ureido group and wherein the linear polysiloxane and all silicon alkoxides contained in the protective layer have a ratio by mass that satisfies the relation of linear polysiloxane / all silicon alkoxides = 15/85 to 90/10 as converted in terms of SiO₂.

4. A laminated body as set forth in either claim 1 or 2, wherein the water soluble polymer present in the protective layer is a vinyl based polymer having a carbonyl group in a cyclic structure.

5. A laminated body as set forth in either claim 1 or 2, wherein the protective layer has an average thickness of 100 to 1,000 nm.

6. A laminated body as set forth in either claim 1 or 2, wherein the inorganic compound layer contains aluminum oxide.

7. A printing ink-layered laminated body comprising a printing ink layer laid on the protective layer side of a laminated body as set forth in either claim 1 or 2.

8. A packaging material comprising a printing ink-layered laminated body as set forth in claim 7.

9. A packaging material comprising a laminated body as set forth in either claim 1 or 2 and a printing ink-layered laminated body as set forth in claim 7.
